Europäisches Patentamt

European Patent Office

Office européen des brevets

(19)

(11) **EP 1 536 631 A2**

(12) **EUROPEAN PATENT APPLICATION**

(43) Date of publication:
 **01.06.2005 Bulletin 2005/22**

(51) Int Cl.⁷: **H04N 1/60**

(21) Application number: **04014505.4**

(22) Date of filing: **21.06.2004**

(84) Designated Contracting States:
 **AT BE BG CH CY CZ DE DK EE ES FI FR GB GR
 HU IE IT LI LU MC NL PL PT RO SE SI SK TR**
 Designated Extension States:
 **AL HR LT LV MK**

(30) Priority: **26.11.2003 US 723232**

(71) Applicant: **Hewlett-Packard Development
 Company, L.P.
 Houston, TX 77070 (US)**

(72) Inventors:
 • **Zeng, Huanzhao
  Vancouver Washington 98683 (US)**
 • **Humet, Jacint
  Barcelona 08130 (ES)**
 • **Lammens, Johan
  Barcelona 08190 (ES)**

(74) Representative: **Schoppe, Fritz, Dipl.-Ing.
 Patentanwälte
 Schoppe, Zimmermann, Stöckeler & Zinkler
 Postfach 246
 82043 Pullach bei München (DE)**

(54) **Imaging system color profile neutral gray adjustment**

(57) A number of sets of color values for an imaging system to output a corresponding number of neutral gray outputs at different lightness levels, is computed by interpolation, based at least in part on received or taken measurements of a number of near-neutral patches for the different lightness levels printed by the imaging system using a number of sets of color values of the imaging system's color space. The color values of the imaging system's color space are derived based on a number of sets of color values of a profile connection space (PCS) in accordance with a print table of a color profile of the imaging system mapping color value sets from the PCS to color value sets in the imaging system's color space. The various sets of defining color values define the near-neutral patches in the PCS.

Pre-design a target with near neutral color patches surround neutral gray in lightness levels from white to black in a PCS
102

Define desired neutral aim in a device independent color space
104

Convert the pre-designed target defined in the PCS into the imaging system color space using the print table of the color profile of the imaging system to be adjusted
106

Print the target, and measure it by e.g. a colorimeter or a spectrophotometer
108

Convert (if necessary) the collected measurements into the PCS
110

Compute the imaging system color values to yield the desired neutral gray in each lightness level
112

Adjust the print table of the color profile of the imaging system
114

**Figure 1a**

EP 1 536 631 A2

Start from the 1st neutral node (first L* level) 124

Go to next neutral node (next L* level) 126

Get imaging system color values and their corresponding measured L*a*b* values surrounding the neutral node in this L* level 128

Construct eight triangles for three-point interpolation 130

Search for triangle that contains the desired neutral color 132

Compute corresponding imaging system color values by three-point interpolation 134

No

Last neutral node? 136

Yes

Compute final imaging system color values of each node to achieve the corresponding L* node value 138

End

112

**Figure 1b**

2

**Description**

<u>BACKGROUND</u>

Imaging systems have become exceedingly popular peripherals for computers and other types of computerized devices. They enable users to print images onto media, thus also referred to as printers. The most common media is paper.

There are many different types of imaging systems, including most popularly inkjet printers and laser printers. Inkjet printers generally operate by ejecting fine droplets of ink onto the media, whereas laser printers generally operate by fusing toner onto the media. Either type of imaging systems may be a black and white only printer or a color printer.

With higher resolution imaging systems, and improved calibration methods, imaging quality has improved rapidly in recent years, approaching photo quality. As a result, neutral gray calibration has become increasingly important. For example, black and white images may be mixed with color images and have to be imaged together without the opportunity to switch to a black and white mode. Further, often, neutral gray nodes in a color transformation lookup table (LUT) are used for interpolating near-gray colors, accordingly, neutral gray balance is important for imaging neutral colors.

One neutral gray adjustment technique employs a 1-D LUT table for neutral gray mapping. Another technique employs a LUT for converting an imaging system's color space to a modified color space to serve neutral mapping. Yet, another technique involves the creation of a neutral gray mapping by applying a colorimetric table in the color profile of an imaging system. Each of these techniques has its disadvantages at least at times and/or in certain circumstances.

<u>BRIEF DESCRIPTION OF THE DRAWINGS</u>

Embodiments of the present invention will be described by way of the accompanying drawings in which like references denote similar elements, and in which:

Figures 1 a-1 b illustrate a method in accordance with one embodiment of the present invention;
Figure 2a graphically illustrates an example neutral aim in an example PCS relative to the media white;
Figure 2b graphically depicts an example neutral gray target with a plurality of near-neutral color patches in an example PCS;
Figure 2c graphically depicts measurements of the example neutral gray target of Fig. 2b in the example PCS;
Figure 2d graphically illustrates measurements in an example lightness level in the example PCS in further detail;
Figures 2e-2f illustrate determination of whether a point P is inside or outside a triangle ABC;
**Figures 2g-2h** illustrate an interpolation approach at a lightness level, in accordance with one embodiment;
**Figure 3** illustrates an example computing device incorporated with at least some of the techniques of the method of **Fig. 1a-1b,** in accordance with one embodiment;
**Figure 4** illustrates an example imaging system incorporated with at least some of the techniques of the method of **Fig. 1a-1b**, in accordance with one embodiment; and
Figure 5 illustrates an example storage medium having the color profile adjustment logic of one embodiment of the present invention, suitable for use to program a computing device or an imaging system, in accordance with one embodiment.

<u>DETAILED DESCRIPTION OF EMBODIMENTS OF THE INVENTION</u>

Embodiments of the present invention include, but are not limited to, methods to calibrate neutral gray outputs of imaging systems, storage medium, computing devices and/or imaging systems endowed with implementations of at least portions of the methods.

In the following description, various aspects of embodiments of the present invention will be described. However, it will be apparent to those skilled in the art that embodiments of the present invention may be practiced with only some or all aspects described. For purposes of explanation, specific numbers, materials and configurations are set forth in order to provide a thorough understanding of these embodiments of the present invention. However, it will be apparent to one skilled in the art that various embodiments of the present invention may be practiced without the specific details. In other instances, well-known features are omitted or simplified in order not to obscure the disclosed embodiments of the present invention.

Various operations will be described as multiple discrete steps in turn, in a manner that is helpful in understanding these embodiments of the present invention, however, the order of description should not be construed as to imply that these operations are necessarily order dependent. In particular, these operations need not be performed in the order of presentation.

The phrase "in one embodiment" is used repeatedly. The phrase generally does not refer to the same embodiment, however, it may.

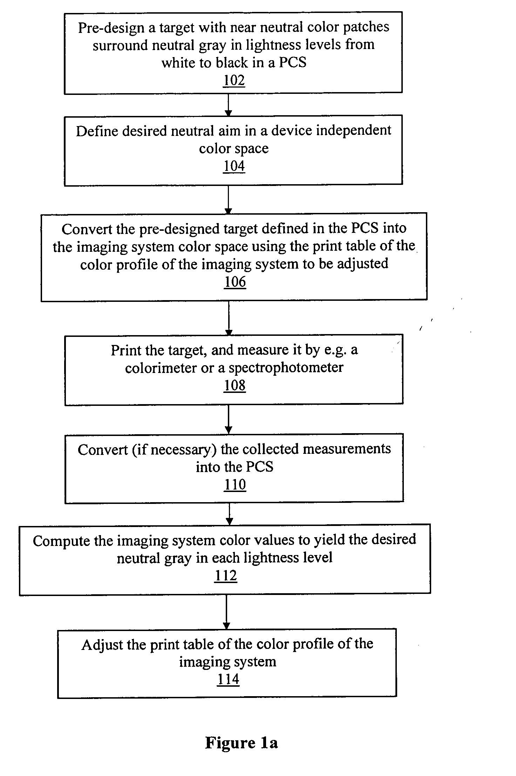

Referring now to **Fig. 1a** wherein an overview of an imaging system color profile neutral gray adjustment method of one embodiment of the present invention, is illustrated. For ease of understanding, the embodiment assumes that the imaging system to have its neutral gray outputs calibrated employs a color profile. Further, the color profile includes an adjustable print table having mappings that map colors from a device-independent profile connection space (PCS) to the imaging system's color space for printing. Examples of device-independent PCS include luminance-chrominance color spaces, such as CIE L*a*b*, Ycc, and CIE CAM97s Jab color spaces (CIE = Commission Internationale de l'Eclairage). Examples of imaging system color spaces include CMYK, CMY, RGB and so forth (CMYK = Cyan, Magenta, Yellow and Black, RGB = Red, Green and Blue). For these examples, the print tables may be tags, such as BtoAn tags in printer ICC profiles, where n is 0, 1, or 2, denoting a perceptual rendering intent. A print table may be organized in the form of a 3-D lookup table (LUT). Furthermore, it may include a set of 1-D tables in front of the 3-D LUT to adjust each of the PCS channels individually and a set of 1-D tables followed the 3-D LUT to adjust each of the imaging system channels. As will be described in more detail below, the embodiment adjusts the neutral nodes in the print table of the color profile, based on measurements of a printed target, printed using color values mapped in accordance with the print table.

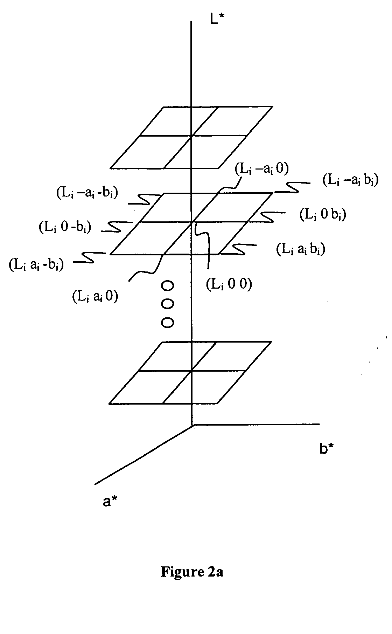

As shown, for the embodiment, a target with near-neutral color patches surrounding neutral gray in various lightness levels from white to black, block **102,** is first designed for printing and measurement. **Fig. 2a** illustrates one such example target defined in the context of an example PCS, the CIE L*a*b* color space. The target includes multiple near-neutral color patches surrounding the neutral area at different lightness levels. For a lightness level $L_i$ (between white and black), the near-neutral color patches comprise the area defined by $\{(L_i, a_i, — b_i), (L_i, a_i, b_i), (L_i, -a_i, b_i), (L_i, -a_i, -b_i)\}$. For L*a*b* color space relative to media white, the $L_i$ is from the media white (100) to black (0). In each L* level, there are nine near-neutral color patches. Pseudo codes to generate each of the color patches in L*a*b* color space relative to the media white are:

```
for ( idx_L = 0; idx_L < n; idx_L++ )

{

    for ( idx_a = -1; idx_a <= 1; idx_a++)

    {

        for (idx_b = -1; idx_b <= 1; idx_b++)

        {
```

$$L_i = idx\_L \cdot \frac{100}{n-1}$$
$$a_i = idx\_a \cdot \Delta a$$
$$b_i = idx\_b \cdot \Delta b$$

```
        }

    }

}
```

where $\Delta a$ and $\Delta b$ are the intervals of a* coordinate and b* coordinate for the target design. There are total of n L* levels. In each L* level, there are three steps of a* and three steps of b*, which made a total of nine color patches in each L* level, or 9 by n color patches in the entire target.

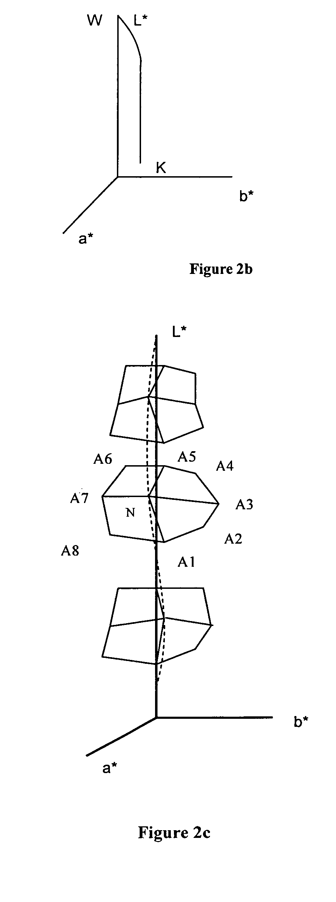

Next, the desired neutral aim in a device-independent color space, block **104,** is defined. **Fig. 2b** illustrates an example neutral aim expressed in the context of an example device-independent color space, the CIE L*a*b* space, relative to the media white (W). The point K in **Fig. 2b** denotes the black point. The neutral aim can be defined in two values, a* and b*, and then interpolate these two values to all L* levels. For example, if the color table to be modified has n neutral node points, n sets of L*a*b* color values for neutral aim points should be derived.

For ease of understanding, the remaining description will be presented with the CIE's L*a*b* color space model as the PCS. However, as will be readily apparent from the description to follow, in alternate embodiments, the PCS may be of other device-independent luminance-chrominance color space models.

Next, the print table to be adjusted is applied to convert the pre-designed target defined in the PCS into the imaging system's color space, block **106**. The target is then printed using the imaging system, and measurements of the printed target are taken, employing e.g. a colorimeter or a spectrophotometer, block 108.

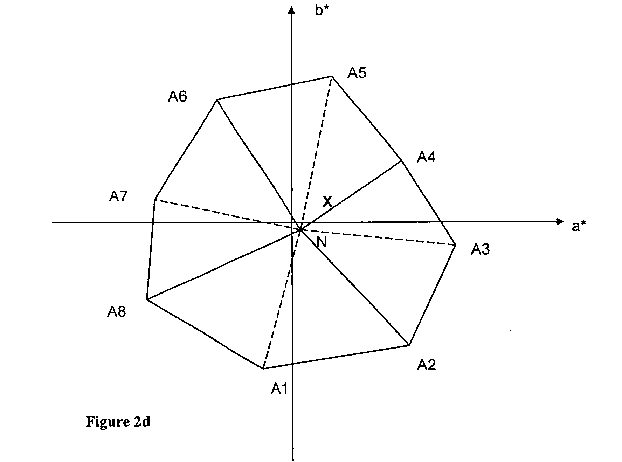

Assuming the measurements are not taken in a manner that directly provides color space model values in the PCS (e.g. the CIE L*a*b* color space model of **Fig. 2b).** The measurements are converted into color space model values of the PCS, block **110. Fig. 2c** illustrates an example measurement of the earlier described target of **Fig. 2b,** in the context of the PCS. The dashed line in **Fig. 2c** represents the corresponding colors of the neutral points in the L* axis in **Fig. 2b.** It represents the neutral gray before applying the neutral calibration. The task of the neutral gray adjustment is to bring the neutral nodes to the aimed neutral axis as shown in **Fig. 2b.** For a pre-designed target neutral node N (this is not necessary the aimed neutral node as shown in Fig. b), the measured near-neutral patch is comprised of the area defined by the eight points A1-A8. See also **Fig. 2d**. In alternate embodiments, where the measurements are taken in a manner that directly provides color space model values in the PCS, the conversion operation may be avoided.

Continuing to refer to **Fig. 1a**, next, the color values of the imaging system in each lightness level to yield the desire neutral gray are computed, based at least in part on the measurements of the printed target in the context of the PCS, blocks 112, to be described more fully below.

Thereafter, the print table of the color profile of the imaging system, or more specifically, the neutral nodes of the print table, may be adjusted accordingly, in view of the color values computed in block **112**, block **114.**

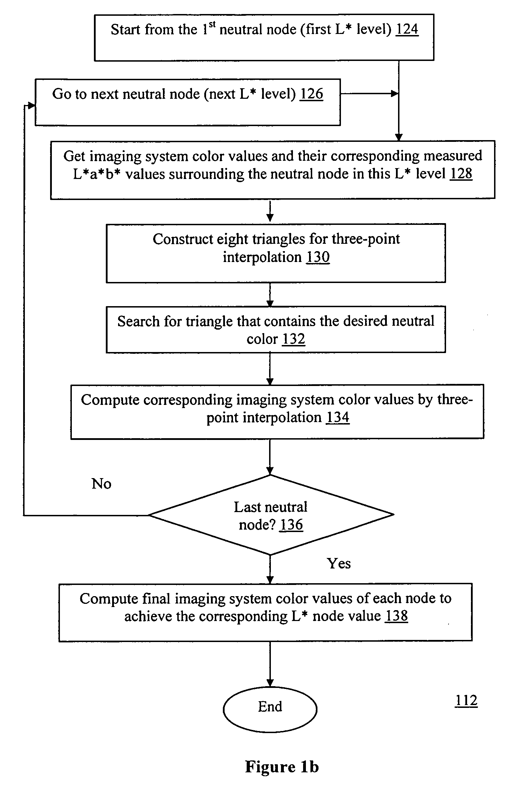

**Fig. 1b** illustrates the operations of block 112 in further details, in accordance with one embodiment. As illustrated, the operations start from the selection of a first neutral node (i.e. first lightness, or L*, level), block **124.** Typically, the selection starts with a neutral node at either end of the lightness axis, however, in alternate embodiments, the selection may be arbitrary.

Upon selection of the neutral node or L* level, the imaging system color values and their corresponding measured L*a*b* values surrounding of the corresponding L* level are retrieved, block **128.** For the embodiment, up to 9 set-pair (A1 to A8 and N in **Fig. 2d)** of these values are retrieved.

Then, area analyses are performed to determine an area encompassing the desired neutral node of the lightness level (the location marked "X" for the example of **Fig. 2d).** In **Fig. 2d,** the L*a*b* values and the associated imaging system color space values of A1 to A8 and N points are determined by the measurement of the color patches printed using the imaging system color space values converted from PCS values defined by the pre-designed target. And the L*a*b* values of the location X (the aimed neutral gray) is defined by the neutral aim as shown in **Fig. 2b.**

For the illustrated embodiment, the area analyses begin with constructing eight triangles, block 130. More specifically, the eight triangles are constructed by first dividing the area defined by the eight points A1-A8 into 4 quadrangles, A8A1A2N, A2A3A4N, A4A5A6N and A6A7A8N (see also **Fig. 2d).** Each of the 4 quadrangles is then further subdivided to provide 2 triangles, giving the total of 8 triangles.

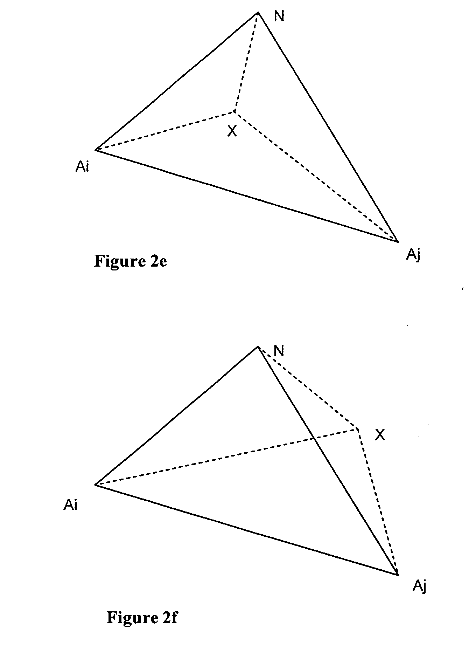

The 8 triangles are then exhaustively searched to determine the triangle containing the desired neutral color of a lightness level (point X for the example of Fig. 2d), block 132. In various embodiments, the determination is made based on the principle that if the point X is within a triangle defined by three points AiAjN as the example of Fig. 2e, the area defined by AiAjN is equal to the sum of the areas defined by AiAjX, AjNX and NAiX respectively. On the other hand, if point X is outside a triangle defined by the three points AiAjN as the example of Fig. 2f, the area defined by AiAjN is less than the sum of the areas defined by AiAjX, AjNX and NAiX respectively. Accordingly, the areas of the 3 triangles defined by AiAjNX, where (i j) equal to one of (8 1), (1 2), (2 3), (3 4), (4 5), (5 6), (6 7) and (7 8), are computed and compared to the area of AiAjN until the triangle containing the aimed neutral gray is found..

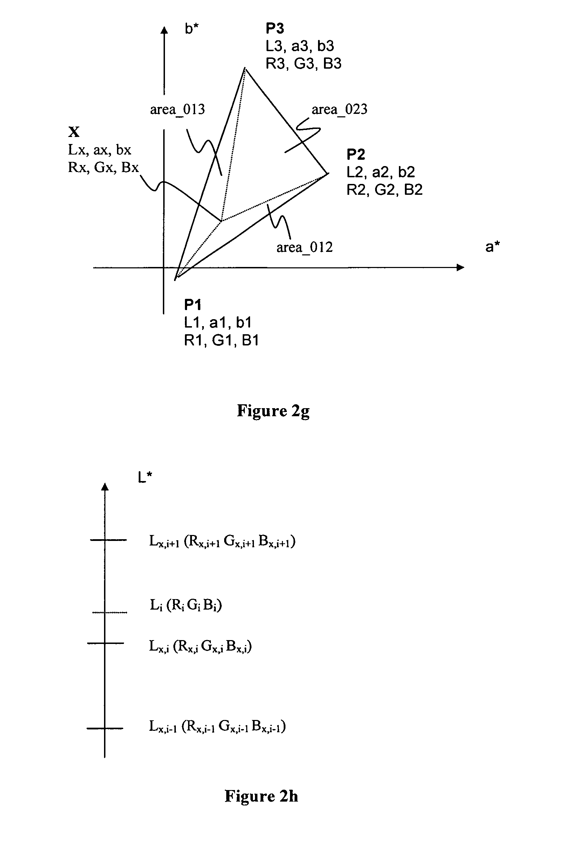

Once the triangle containing the neutral color for the current selected lightness is found, the corresponding imaging system color value set (the color values in the device color space) is computed by three-point interpolation, block **134. Fig 2g** graphically depicts the operation of block **134** for an embodiment where the color profile of the imaging system is a RGB profile. The triangle P1 P2P3 is equivalent to the triangle AiAjN in Fig. 2e. This is the triangle that contains the aimed neutral gray (Lx, ax, bx) in this L* level. The task in this step is to find (R0, G0, B0)

The color values of each of the color channels, the Red (R), the Green (G) and the Blue (B) color channel, are calculated for the corresponding neutral gray output. The imaging device RGB color values are calculated by weighting the R, G and B color values based on the weights computed on the corresponding set of L*a*b* color space model values of the vertices of the triangle containing the neutral node of the lightness level in the PCS.

More specifically, the imaging system color space values $(R_x, G_x, B_x)$ of the neutral aimed point X are calculated in accordance with the following formulas:

$$Rx = \frac{R1 \cdot area\_023 + R2 \cdot area\_013 + R3 \cdot area\_012}{area\_123}$$

$$Gx = \frac{G1 \cdot area\_023 + G2 \cdot area\_013 + G3 \cdot area\_012}{area\_0123}$$

$$Bx = \frac{B1 \cdot area\_023 + B2 \cdot area\_013 + B3 \cdot area\_012}{area\_0123}$$

where area_012, area_013 and area_023 are the areas occupied by triangles OP1P2, OP1P3 and OP2P3 in the 2-D a*b* plane; andarea_123 is the sum of area_012, area_013 and area_023. Each triangle area is computed using (L, a, b) coordinates of the three points of the triangle. The L* value of the ($R_x$, $G_x$, $B_x$) neutral gray point is also computed. In one embodiment, it is computed as the weighted average as follows:

$$Lx = \frac{L1 \cdot area\_023 + L2 \cdot area\_013 + L3 \cdot area\_012}{area\_123}$$

At block **136**, a determination is made whether above described operations have been performed for each lightness level. If not, the process continues at block **126**, where the above-described operations are performed for another neutral node (i.e. lightness level). If the above-described operations have been performed for each lightness level, the process goes to 138.

Above process and equations are applied to compute ($R_x$, $G_x$, $B_x$) for each L* level or node point. ($R_x$, $G_x$, $B_x$) are the imaging system color space values to produce PCS values, (Lx, ax, bx). The intention is to have (Lx, ax, bx) equal to the aimed neutral gray (Li, ai, bi). However, because L1, L2, and L3 of the three points in a triangle are not exactly equal to the value of L* level (Li), the Lx value of a lightness level is usually not exactly the same as Li. Accordingly, in various embodiments, after all node points are computed, the RGB values of each point are adjusted to achieve an L* value of the corresponding node point, block **138. Fig. 2h** shows how to perform this adjustment. In a lightness level i, its lower level is (i-1) and its upper level is (i+1). The L* value and corresponding (R, G, B) values of each level are obtained in the above process (blocks 124 to 136). In **Fig. 2h,** $L_{x,I}$ is slightly off from Li. If Li is in the range between $L_{x,i+1}$ and $L_{x,I}$, following 1-D interpolation is performed to correct the L* value for the node i:

$$W = \frac{L_{x,i+1} - L_i}{L_{x,i+1} - L_{x,i}}$$

$$R_i = W \cdot R_{x,i} + (1 - W) \cdot R_{x,i+1}$$

$$G_i = W \cdot G_{x,i} + (1-W) \cdot G_{x,i+1}$$

$$B_i = W \cdot B_{x,i} + (1-W) \cdot B_{x,i+1}$$

where W is the weighting parameter for linear interpolation.

If Li is in the range between $L_{x,i}$ and $L_{x,I-1}$, i and (i - 1) points should be applied for linear interpolation.

In alternate embodiments, the color profile of the imaging system may be other color profiles, e.g. a CMYK color profile.

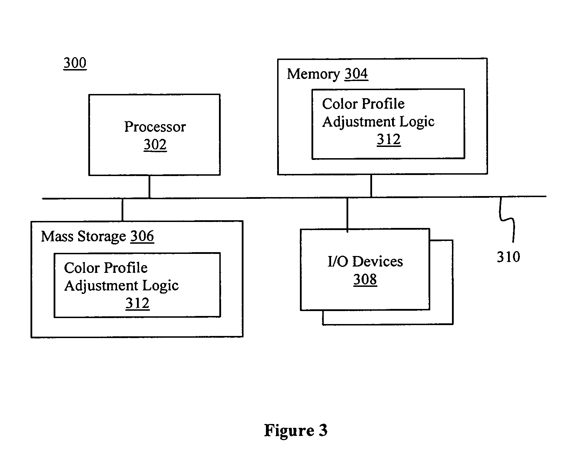

**Figure 3** illustrates a computing device, suitable for use to practice at least some aspects of the method of **Fig.1a-1b**, in accordance with one embodiment. As illustrated, for the embodiment, computing device **300** includes processor **302,** memory **304,** mass storage **306** and I/O devices **308** coupled to each other via bus **310.** I/O devices **308** may include keyboards, cursor control devices, displays, communication interfaces, and so forth. Additionally, for some variants of embodiment, I/O devices **308** may comprise a spectrophotometer and/or a colorimeter.

Memory **304** and mass storage **306** may be employed to store instructions and/or data, more specifically, a temporary and a permanent copy of color profile adjustment logic **312** implementing the method of **Fig. 1a-1b.**

In other words, for the embodiment, computing device **300** may be employed, e.g. by a manufacturer of an imaging system, or a user of an image system, to calibrate and generate a modified color profile for the imaging system, to facilitate more balanced and/or preferred imaging of neutral gray by the imaging system.

As alluded to earlier, in various embodiments, computing device **300** may practice all or portion of the computing operations illustrated in **Fig. 1a-1b**. For example, computing device **300** may receive (that is, provided with) the relevant measurements of the pre-designed targets, and performs the operations of blocks **110-112** in response. Computing device 300 may further cause the print table of the color profile of the imaging system to be adjusted accordingly, by providing the resulting color values to another computing device or to the imaging system, to in turn perform the adjustment operations of block **114.**

In yet other embodiments, computing device **300** may be employed to perform only the computing operations of block **112**. For these embodiments, computing device 300 may e.g. receive the converted measurements from another device, and performs the computing operations of blocks **112** in response. Again, computing device **300** may further cause the color profile of the imaging system to be adjusted accordingly, by providing the resulting color values to another computing device or to the imaging system, to in turn perform the adjustment operation of block **114**.

In yet other embodiments, computing device **300** (especially those equipped with measurement devices such as spectrophotometers and/or colorimeters) may perform also the measurement operations of block **108** as well as the adjustment operation of block **114.**

In summary, computing device **300** may perform all or some of the operations of blocks **108-114** of the color profile neutral gray calibration method of **Fig. 1a-1b.**

Otherwise, processors **302,** memory **304,** mass storage **306,** I/O devices **308**, and bus **310** represent a broad range of such elements.

In various embodiments, computing device 300 may be a server, a desktop computer, a computing tablet, a laptop computer, a palm sized personal assistant, a pocket PC, or other computing devices of the like.

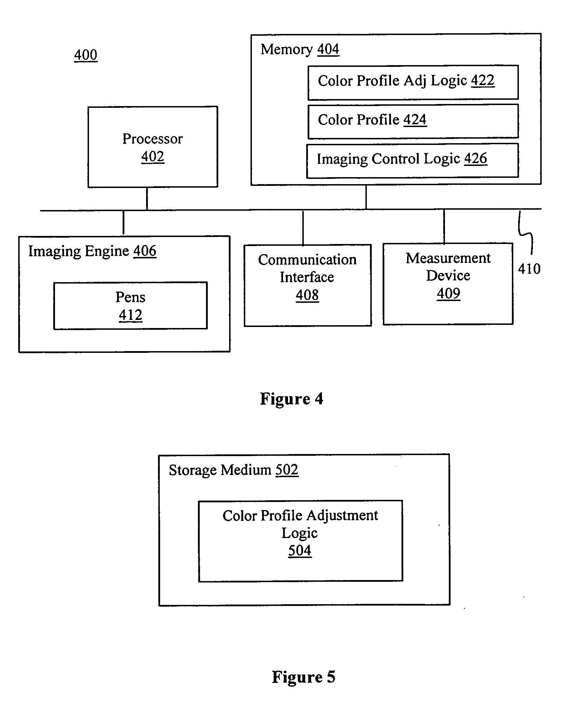

**Figure 4** illustrates an imaging device, suitable for use to practice some or all of the method of **Fig.1a-1b**, in accordance with one embodiment. As illustrated, for the embodiment, imaging system **400** includes processor/controller **402**, memory **404**, imaging engine **406** and communication interface **408** coupled to each other via bus **410**. Imaging engine **406** comprises pens **412** for outputting various primary colorants.

Memory **404** is employed to store instructions and/or data, more specifically, imaging control logic **426**, color profile **424** and color profile adjustment logic **422.** Imaging control logic **426** is employed to control pens **412** to print images onto media. Color profile **424** is applied by imaging control logic **426** during imaging. Color profile adjustment logic **422** implements at least portions of the method of **Fig. 1a-1b**.

In other words, imaging device **400,** in addition to being used for imaging on media, may be employed, e.g. by its manufacturer or a user, to calibrate and adjust its color profile for outputting the desired neutral gray outputs.

In various embodiments, imaging device **400** may practice all or portion of the operations illustrated in **Fig. 1a-1b**. For example, in various embodiments, imaging device **400** may be employed to perform the operations of blocks **110-114.** For these embodiments, imaging device **400** receives (that is, provided with) the relevant measurements of the pre-designed target printing on the imaging device to be adjusted, and performs the operations of blocks **110-114** in response.

In other embodiments, imaging device **400** equipped with a colorimeter, a spectrophotometer or other measurement device of the like may be employed to perform also the operations of block **108.**

In yet other embodiments, imaging device **400** may be employed to perform only the operations of blocks **112-114**. For these embodiments, imaging device **400** receives the converted measurements, and performs the operations of blocks **112-114** in response.

In summary, imaging device **400** may perform all or some of the operations of blocks **108-114** of the color profile neutral gray calibration method of **Fig. 1a-1b.**

Imaging control logic **426** represents a broad range of such element, including but is not limited to imaging control logic found in many imaging systems available from Hewlett Packard Corp of Palo Alto, CA. In particular, imaging control logic 426 may be employed to image pixels of images onto media employing one or more colorants. Imaging control logic **426** accesses color profile **424** as adjusted by color profile adjustment logic **422**, and images the pixels accordingly.

Otherwise, processors **402**, memory **404**, imaging engine **406,** communication interfaces **408,** and bus **410** represent a broad range of such elements.

In various embodiments, imaging device **400** may be an inkjet printer or an electrophotographic printer.

Figure 5 illustrates an article suitable for use to store executable instructions implementing at least portions of the method of **Fig.1 a-1 b**, in accordance with one embodiment. For the embodiment, storage medium **502** includes color profile adjustment logic **504** comprising instructions that implement operations **110-114** of the method of **Fig. 1a-1b**. The stored instructions may be used to program an apparatus, such as computing device **300** and/or imaging system **400,** to perform some or all of operations **110-114** of the method of **Fig. 1a-1b,** as earlier described.

In alternate embodiments, as alluded to earlier, color profile adjustment logic **504** may implement merely only some of operations **110-114** of the method of **Fig. 1 a-1b.**

In various embodiments, storage medium **502** may be a diskette, a tape, a compact disk (CD), a digital versatile disk (DVD), a solid state storage device, or other electrical, magnetic and/or optical storage devices of the like.

Thus, it can be seen from the above descriptions, embodiments of a novel method to adjust a color profile of an imaging system for neutral gray balance and/or preference have been described. While the novel method has been described in terms of the foregoing embodiments, those skilled in the art will recognize that the method is not limited to the embodiments described. The method may be practiced with modification and alteration within the spirit and scope of the appended claims.

Thus, the description is to be regarded as illustrative instead of restrictive.

**Claims**

1. An apparatus comprising:

   storage medium having stored therein a plurality of programming instructions designed to enable the apparatus to

   receive or take a plurality of measurements of a plurality of near-neutral patches for different lightness levels printed by an imaging system using a first plurality of sets of color values of the imaging system's color space, derived based on a second plurality of sets of color values of a profile connection space (PCS), and in accordance with a print table of a color profile of the imaging system mapping color value sets from the PCS to color value sets in the imaging system's color space, the second plurality of sets of color values defining the near-neutral patches in the PCS, and

   compute a third plurality of sets of color values for the imaging system to output a corresponding plurality of neutral gray outputs at different lightness levels, by interpolation, based at least in part on the received or taken measurements.

2. The apparatus of claim 1, wherein the programming instructions are further designed to enable the apparatus to compute the first sets of color values based on the second sets of color values of the profile connection space (PCS) defining the near-neutral patches in the PCS, in accordance with the print table of the color profile of the imaging system.

3. The apparatus of claim 1, wherein the programming instructions are further designed to enable the apparatus to compute the third plurality of sets of color values by interpolation by performing a systematic area analysis at a lightness level of the PCS to determine an area of the measured near-neutral patch in the lightness level containing a neutral node of the lightness level, and compute a corresponding set of the third plurality of sets of color values based at least in part on a weighted average of a fourth plurality of sets of color values in the imaging system's color space corresponding to plurality of nodes in the PCS defining the area in the lightness level containing the neutral node of the lightness level.

4. The apparatus of claim 3, wherein the programming instructions are further designed to enable the apparatus to weigh each color component of each set of the fourth plurality of color values in accordance with an amount of contribution to the area containing the neutral node at the lightness level by an area defined by the neutral node, a corresponding node and at least one other node defining the area in the lightness level containing the neutral node of the lightness level.

5. The apparatus of claim 4, wherein the color profile of the imaging system is a RGB profile, and each color component is a selected one of a R, a G and a B color component.

6. The apparatus of claim 4, wherein the programming instructions are further designed to enable the apparatus to adjust the corresponding set of the third plurality of sets of color values in view of a weighted average of measured lightness of the nodes defining the area containing the neutral node at the lightness level.

7. The apparatus of claim 6, wherein the programming instructions are further designed to enable the apparatus to weigh the measured lightness of each node in accordance with an amount of contribution to the area containing the neutral node at the lightness level by an area defined by the neutral node, the node and at least one other node.

8. The apparatus of claim 6, wherein the programming instructions are further designed to enable the apparatus to perform said adjustment by linearly interpolating the corresponding set of the third plurality of sets of color values to a darker neutral gray if the weighted average of the measured lightness of the nodes defining the area containing the neutral node at the lightness level is greater than the lightness level, and linearly interpolating the corresponding set of the third plurality of sets of color values to a lighter neutral gray if the weighted average of the measured lightness of the nodes defining the area containing the neutral node at the lightness level is less than the lightness level.

9. The apparatus of claim 6, wherein the programming instructions are further designed to enable the apparatus to repeat for at least one other lightness level, said performance of systematic area analyses, said computing of a corresponding set of the third plurality of sets of color values, and said adjusting of the corresponding set.

10. The apparatus of claim 1, wherein the programming instructions are further designed to enable the apparatus to adjust the print table of the color profile of the imaging system in view of the computed third plurality of sets of color values.

Pre-design a target with near neutral color patches
surround neutral gray in lightness levels from
white to black in a PCS
102

Define desired neutral aim in a device independent
color space
104

Convert the pre-designed target defined in the PCS into
the imaging system color space using the print table of the
color profile of the imaging system to be adjusted
106

Print the target, and measure it by e.g. a
colorimeter or a spectrophotometer
108

Convert (if necessary) the collected measurements
into the PCS
110

Compute the imaging system color values to yield the desired
neutral gray in each lightness level
112

Adjust the print table of the color profile of the
imaging system
114

**Figure 1a**

Start from the 1ˢᵗ neutral node (first L* level) 124

Go to next neutral node (next L* level) 126

Get imaging system color values and their corresponding measured L*a*b* values surrounding the neutral node in this L* level 128

Construct eight triangles for three-point interpolation 130

Search for triangle that contains the desired neutral color 132

Compute corresponding imaging system color values by three-point interpolation 134

Last neutral node? 136

No

Yes

Compute final imaging system color values of each node to achieve the corresponding L* node value 138

End

112

**Figure 1b**

**Figure 2a**

W
L*

K

b*

a*

**Figure 2b**

L*

A6
A5
A4

A7
A3

N

A2

A8

A1

b*

a*

**Figure 2c**

Figure 2d

Figure 2e

Figure 2f

**b\***

**P3**
L3, a3, b3
R3, G3, B3

area_013

area_023

**X**
Lx, ax, bx
Rx, Gx, Bx

**P2**
L2, a2, b2
R2, G2, B2

area_012

**a\***

**P1**
L1, a1, b1
R1, G1, B1

**Figure 2g**

**L\***

$L_{x,i+1}$ ($R_{x,i+1}$ $G_{x,i+1}$ $B_{x,i+1}$)

$L_i$ ($R_i$ $G_i$ $B_i$)

$L_{x,i}$ ($R_{x,i}$ $G_{x,i}$ $B_{x,i}$)

$L_{x,i-1}$ ($R_{x,i-1}$ $G_{x,i-1}$ $B_{x,i-1}$)

**Figure 2h**

300

Memory 304

Color Profile
Adjustment Logic
312

Processor
302

Mass Storage 306

Color Profile
Adjustment Logic
312

I/O Devices
308

310

**Figure 3**

400

Memory 404

Color Profile Adj Logic 422

Color Profile 424

Imaging Control Logic 426

Processor
402

Imaging Engine 406

Pens
412

Communication
Interface
408

Measurement
Device
409

410

**Figure 4**

Storage Medium 502

Color Profile Adjustment
Logic
504

**Figure 5**